# EUROPÄISCHE PATENTANMELDUNG

(11) **EP 3 072 679 A1**
(43) Veröffentlichungstag der Anmeldung: **28.09.2016**
(21) Anmeldenummer: 16161540.6
(22) Anmeldetag: 22.03.2016
(51) Int. Cl.: B32B 5/02, B32B 5/18, B32B 5/24, B32B 7/12, B32B 9/00, B32B 9/04, B32B 13/02, B32B 13/14, B32B 15/14, B32B 15/18, B32B 15/20, B32B 21/02, B32B 21/10, B32B 21/14, B32B 27/12, B32B 27/30, B32B 27/36

(54) **KOMPOSITPLATTE**

(30) Priorität: 23.03.2015 EP 15160425
(71) Anmelder: FibreCem Holding AG, 8867 Niederurnen (CH)
(72) Erfinder: Schweizer, Ueli, 8037 Zürich (CH); Lehner, Urs, 9533 Kirchberg (CH)
(74) Vertreter: Koelliker, Robert

(57) **Zusammenfassung**

Die vorliegende Erfindung betrifft eine Kompositplatte umfassend (i) eine Deckschicht aus Naturstein, (ii) ein Gewebe, (iii) eine Trägerplatte, einen Klebstoff (iv) und einen Klebstoff (v), wobei das Gewebe (ii) mit dem Klebstoff (iv) mit einer Seite der Deckschicht (i) verklebt ist und die Trägerplatte (iii) durch den Klebstoff (v) mit dem Gewebe (ii) und/oder dem ausgehärteten Klebstoff (iv) verklebt ist, wobei die Deckschicht (i) Schiefer, Tonstein, Siltstein, Mergel und/oder Quarzit umfasst und eine Schichtdicke von 0,1 bis 7 mm, gemessen mit einem Messschieber nach DIN 862, besitzt.

Beansprucht wird auch ein Verfahren zur Herstellung der Kompositplatte umfassend den Schritt des Klebens und gegebenenfalls Pressens einer mit ausgehärtetem Klebstoff (iv) und Gewebe (ii) bedeckten Seite der Deckschicht (i) mit einem Klebstoff (v) an die Trägerplatte (iii).

Zudem betrifft die Erfindung die Verwendung der Kompositplatte zur Verkleidung von Fassaden, Wänden, Böden, Dielen und/oder Dächern, sowie die Verwendung der Kompositplatte als äussere Schicht einer vorgehängten Gebäudefassade.

Beansprucht wird auch eine Fassade, insbesondere vorgehängte Gebäudefassade, umfassend mindestens eine erfindungsgemässe Kompositplatte.

## Beschreibung

Die vorliegende Erfindung betrifft eine Kompositplatte umfassend (i) eine Deckschicht aus Naturstein, (ii) ein Gewebe, (iii) eine Trägerplatte, einen Klebstoff (iv) und einen Klebstoff (v), sowie ein Verfahren zur Herstellung der Kompositplatte, die Verwendung der Kompositplatte und eine Fassade, insbesondere eine Gebäudefassade, umfassend mindestens eine erfindungsgemässe Kompositplatte.

Der sichtbare Bereich des Aussen- und Innenbereichs von Gebäuden spielt in der heutigen Zeit eine immer wesentlichere Rolle. Denn optisch attraktive Räume, Wände und Gebäude gewinnen bei der Bauherrschaft mehr und mehr an Bedeutung und sind daher heute ein wichtiger Bestandteil der Architektur.

Daher erstaunt es wenig, wenn Architekten und Designer nach immer neuen Möglichkeiten suchen, die verschiedensten Aussen- und Innenbereiche von Gebäuden mit attraktiven, insbesondere natürlichen Materialien, wie beispielsweise mit diversen Natursteinen, zu verkleiden.

Natursteinverkleidungen sind jedoch in der Regel aufwändig und teuer in der Ausführung. Zudem ist die Schichtdicke und dadurch das Gewicht solcher Naturstein Elemente nicht zu vernachlässigen, was sich insbesondere beim Transport solcher Elemente sowie bei der Verkleidung kleiner Räume mit Natursteinen nachteilig auswirkt.

Deshalb wurden schon verschiedene dünnschichtige Naturstein Komposit-Platten vorgeschlagen. So beschreibt die WO-A-2006/093367 eine Platte umfassend eine Steinplatte, die mit einer Bindeschicht an ein Substrat befestigt ist, eine Isolationsschicht sowie eine Polsterschicht. Das Susbstrat ist bevorzugt eine Glasfaser- oder Steinfasermatte. Als Steinplatte kann Marmor eingesetzt werden. Und die JP-H-03247852 beschreibt eine Stein-Gebäudeplatte, welche auf der Rückseite der Natur- oder Kunststeinplatte mit einer Faser-verstärkten Kunststoffschicht, beispielsweise aus Glasfaser oder Polypropylen, verstärkt ist. Der Naturstein ist nicht näher spezifiziert. Die US-A-2012/0301713 beschreibt eine transparente Kompositplatte, welche im Wesentlichen aus einem Stein und Polystyrol hergestellt ist, wobei die Schichtdicke der Steinschicht 1 bis 5 mm beträgt. Als Stein wird bevorzugt Marmor, Travertin, Jade oder andere durchsichtigen Materialien eingesetzt.

Die DE-A-39 40 102 beschreibt leichtgewichtige Verbundplatten zum Herstellen von Einrichtungsgegenständen und Raumausstattungselementen mit Oberflächen aus Naturstein. Die verwendeten Natursteinfurniere besitzen eine Schichtdicke von unter 7 mm und werden bevorzugt mit Polyesterharz und Glasfaservlies mit den entsprechenden Trägerplatten aus Holz, Metall, Gasbeton, Schaumstoff, Gipskarton, Hohlprofilplatten, Polyester, Wärmedämm- oder Schallisolierungsmaterial verklebt.

Die CN-A-102 108 772 beschreibt eine Komposit Platte mit einer unteren Platte aus Harz oder Plastik und einer dünnen Steinplatte aus Marmor oder Granit, welche fix an der unteren Platte mittels einer dazwischen liegenden Klebeschicht befestigt ist. Die dünne Steinplatte weist eine Schichtdicke von 0.5-6 mm und die untere Platte eine Schichtdicke von 0.1-3 mm auf. Die Klebeschicht ist ein Glasfasernetz mit einem modifizierten Epoxy-Kleber. Als Naturstein Platten werden Steinplatten aus Marmor und Granit erwähnt.

Die CN-A-103 321 125 beschreibt eine Steinplatten Struktur bestehend aus einer Steinplatte, einer Gewebeschicht und einer weiteren Schicht, die bevorzugt eine Polystyrol Isolationsschaum Platte ist. Die Steinplatte hat eine Dicke von 4-7 mm und die einzelnen Schichten sind mit einem wasserfesten Klebstoff miteinander verklebt. Die CN-Y-201 287 493 beschreibt eine Komposit Platte mit einer oberen Schicht, beispielsweise Marmor und einem unteren Teil aus einer keramischen Fliese, Glas, Aluminium-Plastik Panel oder Aluminium Platte mit Zellenstruktur. Die obere und untere Schicht sind miteinander verklebt, beabstandet mit einem 0,1-0,7 mm dicken Fasernetz. Die obere Schicht, d.h. die Steinplatte, besitzt eine Schichtdicke von 2.5 bis 10 mm und die untere Schicht eine Schichtdicke von 3 bis 20 mm.

Die US-A-2010/0300032 beschreibt eine Boden- oder Wand Veredelungsplatte mit Naturstein, umfassend eine Naturstein Oberflächenplatte mit vordefinierter Schichtdicke, Länge und Breite, eine Verstärkungsplatte mit dazu korrespondierender Länge und Breite, wobei die Verstärkungsplatte an der unteren Seite der Natursteinplatte befestigt ist, und eine Grundplatte mit grösserer Länge und Breite, wobei die Grundplatte so profiliert ist, dass verschiedene Veredelungsplatten miteinander verbunden werden können. Die Natursteinplatte besitzt eine Schichtdicke von 10 bis 30 mm, wird aber nicht näher spezifiziert. Die Verstärkungsschicht besteht bevorzugt aus einer Aluminium Kompositplatte, einer Glasfaserschicht, einer Cellulosefaserverstärkte Zement Platte, einer Magnesiumplatte oder einer Urethan Schaumplatte. Die Grundplatte besteht bevorzugt aus Plywood, Faserplatte mit hoher Dichte, Spanplatte, synthetischer Holzplatte, ABS-Harz oder Melaminharz.

Die US-A-2011/0027566 beschreibt eine Naturstein Komposit-Platte umfassend einen Naturstein und eine Verstärkungs-Komposit-Schicht umfassend eine Naturstein Platte mit einer ersten Oberfläche, eine Komposit-Verstärkungsschicht über der ersten Oberfläche der Naturstein Platte, wobei die Komposit-Verstärkungsschicht mindestens eine Verstärkungsschicht und mindestens eine Grundstoff-Schicht aufweist. Die Naturstein Platte weist eine Schichtdicke von 0,5 bis 20 mm auf. In einer Ausführungsform wird eine Naturstein Komposit-Platte beschrieben, umfassend eine Naturstein Platte und eine anorganische Grundstoff-Schicht, wobei dazwischen ein Glasfaser Gittergewebe angeordnet ist. Die Grundstoff-Schicht umfasst ein anorganisches Material, ein synthetisches Harz Material oder Holz, wobei als anorganisches Material eine Vielzahl an verschiedenen Platten, wie beispielsweise eine Zement-Platte oder eine Beton-Platte, verwendet werden kann, wobei Faserzement Platten nicht genannt sind. Als Naturstein Platten sind Marmor Platten erwähnt.

All diese Schriften erwähnen als Naturstein weder Schiefer, Tonstein, Siltstein, Mergel noch Quarzit. Aber gerade diese Natursteine sind schwierig in dünnen Schichten handhabbar, da sie typischerweise als Schichtmaterial aufgebaut sind und keine - oder nur eine sehr geringe - innere Kohäsion aufweisen. Deshalb können sie nicht wie in der genannten Literatur in dünne Schichten geschnitten werden, da sie sehr schnell zerbröckeln, d.h. auseinander fallen.

Um diese Nachteile zu umgehen, wird seit einiger Zeit auch Naturstein in Form einer sehr dünnen, abgespaltenen Schicht Naturstein, beispielsweise Naturschiefer, angeboten. Um die Stabilität von solchen dünnen Natursteinschichten wie Naturschiefer beim Transport und bei der Verarbeitbarkeit zu gewährleisten, wird auf der einen Seite des Natursteins typischerweise ein faserverstärkter Kunstharz Belag aufgetragen. Solche dünne Natursteinschichten mit faserverstärktem Kunstharz Belag sind kommerziell erhältlich und werden in der Regel grossformatig an Wände geklebt.

Eine solche Verfahrensweise macht jedoch nur Sinn, wenn grosse Flächen im Innenbereich von Gebäuden mit dünnen Natursteinschichten verklebt, d.h. beschichtet, werden. Denn das Zuschneiden und Verkleben von kleineren Flächen auf der Baustelle ist sehr Zeit intensiv und Fehler anfällig. Problematisch sind einerseits die Randzonen von verklebten Natursteinschichten, da sie schnell als Schmutzfänger dienen können. Dies wiederum begünstigt Pilz-, Flechten- und/oder Moosbefall, wodurch die Alterung beschleunigt wird. Zudem ist es möglich, dass es an der Randzone Hohlräume gibt, wodurch sich beispielsweise nach Frost-Tau Beanspruchung die Natursteinschicht schneller ablöst. Auch dürfen solche Natursteinflächen keiner mechanischen Belastung, wie beispielsweise Abrieb oder Verkratzung, ausgesetzt werden, denn die äusserst dünnwandige Natursteinschicht ist sehr fragil und kann schnell zerstört werden. Da zudem die faserverstärkten Kunstharz Beläge von solchen dünnen Natursteinschichten äusserst uneben sind, ist es andererseits äusserst schwierig, solche Natursteinschichten mit dem Kunstharz Belag vollflächig auf einen Untergrund, z.B. eine Gebäudefläche, zu verkleben. Dies wiederum wäre jedoch äusserst hilfreich, um einen guten und dauerhaften Verbund der Materialien zu erhalten.

Daher stellt sich die Aufgabe, Naturstein Verkleidungselemente für den Aussen- und Innenbereich von Gebäuden bereit zu stellen, welche möglichst dünnwandig aber stabil sind, leicht im Gewicht, gut und störungsfrei verarbeitbar sind und eine hohe Altersbeständigkeit aufweisen, sowie gegebenenfalls einer hohen mechanischen Belastung ausgesetzt werden können. Sie sollen möglichst vollflächig verklebt sein und so auch für den Aussenbereich von Gebäuden einsetzbar sein. Zudem soll die Verklebung dauerhaft sein und ein Pilz-, Flechten- und/oder Moosbefall soll im Wesentlichen nicht möglich sein.

Diese Aufgabe konnte überraschenderweise gelöst werden mit einer Kompositplatte umfassend (i) eine Deckschicht aus Naturstein, (ii) ein Gewebe, (iii) eine Trägerplatte, einen Klebstoff (iv) und einen Klebstoff (v), wobei das Gewebe (ii) mit dem Klebstoff (iv) mit einer Seite der Deckschicht (i) verklebt ist und die Trägerplatte (iii) durch den Klebstoff (v) mit dem Gewebe (ii) und/oder dem ausgehärteten Klebstoff (iv) verklebt ist, wobei die Deckschicht (i) Schiefer, Tonstein, Siltstein, Mergel und/oder Quarzit umfasst und eine Schichtdicke von 0,1 bis 7 mm, bevorzugt von 0,5 bis 7 mm, insbesondere von 0,6 bis 5 mm, gemessen mit einem Messschieber nach DIN 862, insbesondere mit einem Messschieber nach DIN 862 mit Nonius Form A1, besitzt.

Beansprucht wird auch ein Verfahren zur Herstellung der erfindungsgemässen Kompositplatte umfassend den Schritt des Klebens und gegebenenfalls Pressens einer mit ausgehärtetem Klebstoff (iv) und Gewebe (ii) bedeckten Seite der Deckschicht (i) mit einem Klebstoff (v) an die Trägerplatte (iii).

Überraschenderweise wurde gefunden, dass die erfindungsgemässe Kompositplatte und Kompositplatten, die mit dem erfindungsgemäss beanspruchten Verfahren hergestellt werden, viele Vorteile aufweisen. So können überraschenderweise Kompositplatten mit einer dünnen Natursteinverkleidung hergestellt werden, bei welchen die Natursteinverkleidung ein Schichtmaterial wie Schiefer, Tonstein, Siltstein, Mergel und/oder Quarzit umfasst. Da diese Schichtmaterialien keine oder nur eine äusserst geringe innere Kohäsion aufweisen und daher schnell auseinander fallen, sind Kompositplatten mit einer solchen, dünnen Natursteinschicht bisher unbekannt.

Da bei der erfindungsgemässen Kompositplatte und der erfindungsgemäss hergestellten Kompositplatte nur eine äusserst dünne Natursteinschicht verwendet wird, können sehr leichte Kompositplatten hergestellt werden, die trotz geringer Plattendicke sehr hohen physikalischen Anforderungen genügen und somit für die Leichtbauweise geeignet sind. Beispielsweise kann mit einem geeigneten Zement-Faser Komposit - auch Faser-Zement Komposit oder nur Faserzement genannt - als Trägerplatte eine Schichtdicke der erfindungsgemässen Kompositplatte von beispielsweise lediglich 8 mm oder 10 mm erzielt werden. Dadurch können auch grossformatige Kompositplatten hergestellt werden, welche immer noch einfach verarbeitbar sind. Es wurde zudem überraschenderweise gefunden, dass auch eine Vielzahl verschiedenster Trägerplatten eingesetzt werden kann, wodurch Kompositplatten mit unterschiedlichsten Material Eigenschaften bereitgestellt werden können. Zudem sind die Kompositplatten beispielsweise auf der Baustelle einfach verarbeitbar, was eine sehr rationelle Baustelle ermöglicht. So können die Kompositplatten beispielsweise auch problemlos auf die notwendige Grösse zugeschnitten werden, was wichtig für einen vielfältigen Einsatz der Kompositplatten ist.

Für den Fachmann war es unerwartet und nicht vorhersehbar, dass solche Kompositplatten überraschenderweise auf einfache Art und Weise werkseitig ohne Beschädigung der Natursteinschicht rationell in hoher Qualität gefertigt werden. So kann auch die Fehleranfälligkeit der für die Dauerhaftigkeit der Kompositplatte kritischen Klebeverbindung drastisch reduziert werden. Wird die Kompositplatte vollflächig verklebt, entstehen keine Hohlräume zwischen den verklebten Schichten. Dadurch bleibt auch der Seitenrand der Kompositplatte nach einem Zuschneiden gut verklebt und es können sich keinerlei Hohlräume am Seitenrand bilden, wodurch die Frost-Tau Beständigkeit erhöht und die Gefahr eines Abplatzens minimiert wird. Zudem können sich an der Kompositplatte auch keine Stellen bilden, die als Schmutzfänger dienen, was den Pilz-, Flechten- und Moosbefall minimiert. Ausserdem können solche Kompositplatten, insbesondere die Natursteinschicht oder auch die ganze Platte, beispielsweise mit einer Beschichtung und/oder Imprägnierung versehen - und somit versiegelt - werden. Dadurch wird die dünne Natursteinschicht geschützt und sich deren mechanische Belastbarkeit, beispielsweise durch Kratzen, deutlich erhöht. So wurde überraschenderweise auch gefunden, dass die erfindungsgemässen Kompositplatten auch im Aussenbereich - insbesondere auch der dem Wetter zugewandten Seite - eine sehr lange Lebensdauer aufweisen. Gegenstand der Erfindung ist zudem auch die Verwendung der erfindungsgemässen Kompositplatte - beispielsweise in Form von Fliesen - zur Verkleidung von Fassaden, Wänden, Böden, Dielen und/oder Dächern, insbesondere im Aussen- und/oder Innenbereich von Gebäuden, Schiffen, Fahrzeugen, Flugzeugen, Tunneln, U-Bahn Stationen und/oder Objekte wie Monumente oder Brunnen. Zudem wird auch die Verwendung der erfindungsgemässen Kompositplatte als äussere Schicht einer Gebäudefassade, insbesondere vorgehängten Gebäudefassade, beansprucht.

Durch die erfindungsgemässe Verwendung können überraschenderweise Flächen im Innen- wie auch im Aussenbereich von Gebäuden, Schiffen, Fahrzeugen, Flugzeugen, Tunneln, U-Bahn Stationen und/oder Objekte wie Monumente oder Brunnen, mit einem hochwertigen, langlebigen und resistenten Fassadenbekleidungsmaterial mit natürlicher Oberfläche auf einfache Art und Weise ausgekleidet werden. Die erfindungsgemässen Kompositplatten können im Innen- wie auch im Aussenbereich von Gebäuden eingesetzt werden, beispielsweise zur Verkleidung - auch Bekleidung genannt - von Fassaden, Wänden, Böden, Dielen und/oder Dächern. Da die erfindungsgemässen Kompositplatten pro Flächeneinheit auch wesentlich leichter sind als herkömmliche Natursteinplatten, können auch Kompositplatten mit wesentlich grösserem Format einfach verlegt werden.

Zudem wird auch eine Fassade, bevorzugt eine Gebäudefassade, insbesondere eine vorgehängte - und somit eine hinterlüftete - Gebäudefassade, umfassend mindestens eine erfindungsgemässe Kompositplatte beansprucht.

Die erfindungsgemäss beanspruchte Fassade besitzt eine Deckschicht aus Naturstein und somit eine Oberfläche aus natürlichem Material. Überraschenderweise ist sie - auch mit grossformatigen erfindungsgemässen Kompositplatten - einfach herstellbar, wetterbeständig, langlebig und dauerhaft. Aufgrund der dünnen Schichtdicke der Deckschicht (i) können auch grossformatige Kompositplatten auf herkömmliche Art und Weise befestigt werden. So braucht es beispielsweise bei hinterlüfteten Gebäudefassaden auch mit grossformatigen Kompositplatten keine - oder nur wenige - zusätzliche Befestigungselemente pro Platte. Dadurch können auf einfache Art und Weise Fassaden mit einer Naturstein Oberfläche hergestellt werden, die zudem - insbesondere bei Verwendung von grossformatigen erfinderischen Kompositplatten - von Hand und ohne Zusatzgeräte verkleidet werden können. Auch müssen aufgrund des geringeren Gewichts auch bei grossformatigen Kompositplatten keine Befestigungsschienen eingesetzt werden. Dies ist insbesondere bei der Leichtbauweise von Gebäuden und Fassaden von grossem Vorteil.

In der WO-A-2009/110870 werden leichtgewichtige ultra-dünne laminierte Platten mit Naturstein Furnier beschrieben. Zur Herstellung wird eine etwa 2 cm dicke Steinplatte auf beiden Seiten mit einer Deckplatte verklebt und anschliessend in der Mitte zerschnitten. Dadurch entstehen zwei dünne Furnierplatten mit der gleichen Höhe und Breite und einer normalen Schichdicke der Steinplatte von 1 cm. Als Naturstein können beispielsweise Granit, Marmor oder Schiefer eingesetzt werden. Allerdings werden die beschriebenen Platten anhand eines ganz anderen Verfahrens hergestellt, wodurch die Platten ganz anders aufgebaut sind als diejenigen der vorliegenden Erfindung. So umfassen sie beispielsweise auch kein Gewebe, welches mit einem Klebstoff an den Naturstein geklebt wird. Dies wirkt sich u.a. dann nachteilig aus, wenn solche Natursteinplatten mechanisch beansprucht werden.

### Die Kompositplatte

Der Grösse der erfindungsgemässen Kompositplatte sind keine wesentlichen Grenzen gesetzt. So kann beispielsweise die Plattengrösse eine Länge von 3 m oder mehr und eine Breite von beispielsweise 1,2 m oder mehr aufweisen. Die Plattengrösse kann auch kleiner sein und beispielsweise eine Plattenlänge von 0,6 m oder weniger aufweisen und die Plattenbreite kann beispielsweise 0,5 m oder weniger betragen. Eine typische Plattengrösse beträgt beispielsweise 1,2 m x 1 m.

Die Deckschicht (i), das Gewebe (ii) und die Trägerplatte (iii) der erfindungsgemässen Kompositplatte sind mit mindestens einem Klebstoff (iv,v) miteinander verbunden, d.h. verklebt. Dabei ist das Gewebe (ii) mit dem Klebstoff (iv) mit einer Seite der Deckschicht (i) aus Naturstein verklebt. Die Trägerplatte (iii) wiederum ist durch den Klebstoff (v) mit dem Gewebe (ii) und/oder dem ausgehärteten Klebstoff (iv) verklebt. Dabei ist eine vollflächige Verklebung der Deckschicht (i) mit dem Gewebe (ii) mit dem Klebstoff (iv), und/oder der Trägerplatte (iii) mit dem Gewebe (ii) und/oder dem ausgehärteten Klebstoff (iv) mit dem Klebstoff (v), besonders bevorzugt.

Somit befindet sich das Gewebe (ii) bei der erfindungsgemässen Kompositplatte und der erfindungsgemäss erhaltenen Kompositplatte zwischen der Deckschicht (i) und der Trägerplatte (iii), wobei die Klebstoffe (iv,v) das Gewebe (ii), mit der Deckschicht (i) und der Trägerplatte (iii) miteinander verbindet.

In einer ganz bevorzugten Ausführungsform ist die Deckschicht (i) und das Gewebe (ii) mit dem Klebstoff (iv) vollflächig miteinander verklebt, und/oder die Trägerplatte (iii) und das Gewebe (ii) und/oder der ausgehärtete Klebstoff (iv) mit dem Klebstoff (v) vollflächig miteinander verklebt. Somit ist das mit dem ausgehärteten Klebstoff (iv) an der Deckschicht (i) geklebte Gewebe (ii) wiederum mit dem Klebstoff (v) an die Trägerplatte (iii) geklebt, wobei der Klebstoff (iv) und der Klebstoff (v) gleich oder verschieden sein können.

In einer weiteren bevorzugten Ausführungsform weist die erfindungsgemässe Kompositplatte ein Gewicht von 2 bis 30 kg/m², bevorzugt von 3 bis 30 kg/m², bezogen auf die Fläche der Deckschicht (i), auf. Die Ermittlung des Gewichts der Kompositplatte ist dem Fachmann bekannt.

In einer anderen bevorzugten Ausführungsform beträgt die Schichtdicke der erfindungsgemässen Kompositplatte insgesamt etwa zwischen 8 und 20 mm, gemessen mit einem Messschieber nach DIN 862, insbesondere mit einem Messschieber nach DIN 862 mit Nonius Form A1.

In einer weiteren bevorzugten Ausführungsform der Kompositplatte ist an der zur Deckschicht (i) abgewandten Seite der Trägerplatte (iii) mindestens ein Befestigungselement befestigt, um damit die Kompositplatte an einem dafür vorgesehenen Element zu befestigen. Hierzu kann im Wesentlichen jedes für die entsprechende Trägerplatte (iii) geeignete Befestigungselement verwendet werden. Diese können auf die Trägerplatte (iii) geklebt und/oder mechanisch befestigt, beispielsweise geschraubt, werden. Sie können auch - alternative oder zusätzlich - in die Trägerplatte (iii) versenkt werden um eine noch bessere und/oder eine Platz sparende Befestigung zu erreichen. Solche Befestigungselemente sind im Handel erhältlich und dem Fachmann bekannt. Ein nicht-limitierendes Beispiel eines geeigneten Befestigungselementes ist u.a. in EP 1 884 606 beschrieben. Solche Befestigungselemente werden beispielsweise oft bei vorgehängten Gebäudefassaden eingesetzt.

### Die Deckschicht (i) aus Naturstein

Die Deckschicht (i) der erfindungsgemässen Kompositplatte und der erfindungsgemäss erhaltenen Kompositplatte weist eine Schichtdicke von 0,1 bis 7 mm, bevorzugt von 0,5 bis 7 mm, insbesondere von 0,6 bis 5 mm, und ganz besonders bevorzugt von 0,7 bis 3 mm, gemessen mit einem Messschieber nach DIN 862, auf, insbesondere mit einem Messschieber nach DIN 862 mit Nonius Form A1. Eine beispielhafte Schichtdicke der Deckschicht (i) beträgt etwa 0,2 bis etwa 2 mm.

In einer bevorzugten Ausführungsform weist die Deckschicht (i) ein Gewicht von etwa 0.02 bis etwa 4 kg/m², bevorzugt von etwa 0.02 bis etwa 2 kg/m², insbesondere von etwa 0,04 bis etwa 1,5 kg/m², ganz besonders bevorzugt von etwa 0,06 bis etwa 1 kg/m², bezogen auf die Fläche der Deckschicht (i), auf. Die Ermittlung des Gewichts der Deckschicht (i) ist dem Fachmann bekannt und erfolgt typischerweise mit einer Waage.

Die Deckschicht (i) der erfindungsgemässen Kompositplatte besteht aus Naturstein. Geeignete Natursteine sind solche, die ohne zu zerbrechen in einer genügend grossen Fläche mit einer entsprechend dünnen Schichtdicke von Natursteinblöcken abgetragen werden können. Hierzu ist es auch möglich und oft sogar bevorzugt, dass zunächst, d.h. bevor die Deckschicht (i) vom in der Natur vorkommenden Naturstein abgetragen wird, auf die Deckschicht (i) beispielsweise grossflächig, insbesondere vollflächig, mit dem Klebstoff (iv) das Gewebe (ii) geklebt wird. Dadurch wird der abzutragenden Deckschicht (i) zusätzlich Stabilität gegeben, wodurch eine grossflächigere Deckschicht (i) abgetragen werden kann.

Als Natursteine der Deckschicht (i) werden erfindungsgemäss Schiefer, Tonstein, Siltstein, Mergel und Quarzit eingesetzt. Bevorzugte Schiefer umfassen insbesondere Tonschiefer, Ölschiefer, Fischschiefer, Posidonienschiefer, Kupferschiefer und/oder Naturschiefer. Unter dem Begriff Schiefer werden im Sinne der Erfindung Mineralien verstanden, welche sich in dünne Platten aufspalten lassen. Schiefer sind dem Fachmann bekannt. Sie sind typischerweise Sedimentgesteine, die in der Regel sehr feinkörnig sind und oft hohe Anteile an Tonmineralien enthalten.

In einer bevorzugten Ausführungsform ist die Deckschicht (i) mit einer Beschichtung und/oder Imprägnierung behandelt. Dabei kann von der erfindungsgemässen Kompositplatte nur die optisch sichtbare Seite der Deckschicht (i), die ganze Deckschicht (i) oder auch die ganze Kompositplatte beschichtet sein.

Nicht-limitierende Beispiele geeigneter Beschichtungen und/oder Imprägnierungen umfassen Polyurethan (PUR) Lacke, insbesondere 2-Komponenten Polyurethan (2-K PUR) Lacke, Acrylat- und Methacrylat-Lacke, Anti-Graffiti Lacke und/oder strahlenhärtende Lacke. Typischerweise enthalten sie keine Pigmente und/oder Füllstoffe. Solche Beschichtungen und/oder Imprägnierungen dienen insbesondere dem Schutz der Deckschicht (i) vor Beschädigung, insbesondere vor mechanischer Beschädigung wie Abrasion, und der Erhöhung der Altersbeständigkeit der Deckschicht (i) resp. der ganzen Kompositplatte sowie als Witterungsschutz, Oberflächenschutz und/oder als Anti-Graffiti Schutz. Zudem weisen solche Beschichtungen und/oder Imprägnierungen Staub- und Schmutzpartikeln sowie Fett ab, reduzieren das Wachstum von beispielsweise Moos, Flechten, Bakterien und/oder Pilzen, bewirken ein gutes Reinigungsverhalten und verhindern eine allfällige Verfärbung der darunter liegenden Schichten.

### Das Gewebe (ii)

Im Sinne der vorliegenden Erfindung umfasst das Gewebe (ii) der erfindungsgemässen Kompositplatte und der erfindungsgemäss erhaltenen Kompositplatte a) gewebte Materialien, b) zusammenhaftende Fasern wie Vlies und c) auch lose, nicht gewebte resp. nicht zusammenhaftende Fasern. Als Gewebe (ii) können ein oder mehrere gewebte Materialien a), Vliese b) und/oder Fasern c) eingesetzt werden.

Wird das Gewebe (ii), d.h. gewebte Materialien a), Vliese b) und/oder Fasern c) mit einem Klebstoff (iv) auf die Deckschicht (i) aufgetragen und ausgehärtet, entsteht auf der Deckschicht (i) ein faserverstärkter Kunstharz Belag.

Nicht-limitierende Beispiele von gewebten Materialien a), Vliesen b) und/oder Fasern c), die für das Gewebe (ii) geeignet sind, umfassen Naturfasern wie Pflanzenfasern und/oder Fasern mit tierischem Ursprung wie Wolle und/oder Haare; Mineralfasern wie Wollastonit; Chemiefasern wie Fasern aus natürlichen und/oder synthetischen Polymeren, beispielsweise Fasern aus Polyester, Polyamid, Polyethylen, Polypropylen und/oder Polyvinylchlorid; sowie industriell erzeugte anorganische Fasern wie beispielsweise Glasfasern, Basaltfasern, Kohlenstofffasern und/oder Keramikfasern.

Geeignete Gewebe (ii), insbesondere gewebte Materialien a) und Vliese b), sind dem Fachmann bekannt. Geeignete, nicht-limitierende Fasern c), umfassen Naturfasern, Mineralfasern, Chemiefasern wie auch industriell erzeugte anorganische Fasern.

Bevorzugte Gewebe (ii), insbesondere gewebten Materialien a), Vliesen b) und/oder Fasern c), umfassen Kunstfasern, Kunstfasergewebe, insbesondere Kunstfasergewebe aus Chemiefasern, Mineralfasergewebe und/oder Glasfasergewebe.

In einer bevorzugten Ausführungsform weist das Gewebe (ii) ein Gewicht von etwa 0.01 bis etwa 2 kg/m², bevorzugt von etwa 0,04 bis etwa 1,5 kg/m², insbesondere etwa 0,06 bis etwa 1 kg/m², bezogen auf die Fläche der Deckschicht (i), auf. Die Ermittlung des Gewichts der Deckschicht (i) ist dem Fachmann bekannt und erfolgt typischerweise mit einer Waage.

### Die Trägerplatte (iii)

Als Trägerplatte (iii) der erfindungsgemässen Kompositplatte und der erfindungsgemäss erhaltenen Kompositplatte kann im Wesentlichen jede Trägerplatte eingesetzt werden, die hierzu geeignet ist. Dem Fachmann sind solche Trägerplatten bekannt. Bevorzugte Trägerplatten (iii) sind Platten aus Zement-Faser Komposit, auch Zementfaserplatten, Faserzement oder Faserzementplatten genannt, Gips, Keramik, Leichtbeton, Glasfaserbeton, Glas, Metall wie Aluminium, Kupfer, Stahl oder Eisen, Holzplatten aus Naturholz oder Holzwerkstoffplatten, insbesondere Holzspanplatten und/oder MDF-Platten, Kunststoffplatten, insbesondere aus High Pressure Laminate, PVC, Acrylglas oder Plexiglas, und/oder Dämmplatten, insbesondere Dämmplatten aus Polystyrolschaum, Polyurethan, Polyisocyanurat, Mineralwolle, Aerogelplatten und/oder Vakuumplatten. Ganz besonders bevorzugte Trägerplatten (iii) sind Platten aus Zement-Faser Komposit, Faserzement, Glasfaserbeton, Leichtbeton, und/oder Dämmplatten.

In einer bevorzugten Ausführungsform besitzt die Trägerplatte (iii) eine Schichtdicke von 4 bis 20 mm, bevorzugt 4 bis 12 mm, gemessen mit einem Messschieber nach DIN 862, insbesondere mit einem Messschieber nach DIN 862 mit Nonius Form A1.

In einer weiteren bevorzugten Ausführungsform ist mindestens eine Seite der Trägerplatte (iii) mit einem Primer (vi) und/oder einer Imprägnierung (vi) behandelt.

### Die Klebstoffe (iv) und (v)

Für die erfindungsgemässe Kompositplatte und für die mittels erfindungsgemässem Verfahren erhaltene Kompositplatte sind geeignete Klebstoffe (iv) und/oder Klebstoffe (v) dem Fachmann bekannt. Die Klebstoffe (iv) und (v) können gleich oder verschieden sein. Solche Klebstoffe (iv/v) werden auch Kunstharze - und als ausgehärtete Beschichtung Kunstharz Belag - genannt.

Nicht-limitierende Beispiele von Klebstoffen (iv) und/oder (v) sind Klebstoffe auf Basis von Polyester, Polyamid, (Meth)Acrylat, Polyurethan, Epoxy-Härter, Polychloropren, und/oder Schmelzklebstoffe, reaktive Klebstoffe, Kontaktklebstoffe, Dispersionsklebstoffe, Plastisole, strahlenhärtende Klebstoffe und/oder Mehrkomponenten-Klebstoffe.

In einer bevorzugten Ausführungsform wird der Klebstoff (iv), welcher das Gewebe (ii) mit der Deckschicht (i) verbindet, mit einer Gewichtsmenge von etwa 0,2 bis etwa 4 kg/m², bevorzugt von etwa 0,5 bis etwa 3 kg/m², insbesondere etwa 1 bis etwa 2,5 kg/m², auf die Fläche der Deckschicht (i) aufgetragen. Die Bestimmung des Gewichts der Deckschicht (i) ist dem Fachmann bekannt und erfolgt typischerweise mit einer Waage.

In einer anderen bevorzugten Ausführungsform wird der Klebstoff (v), mit welchem die Gewebe/Klebstoff (ii/iv) Schicht, und damit auch die Deckschicht (i), an die Trägerplatte (iii) geklebt wird, mit einer Gewichtsmenge von etwa 0,2 bis etwa 4 kg/m², bevorzugt von etwa 0,5 bis etwa 3 kg/m², insbesondere etwa 1 bis etwa 2,5 kg/m², auf die Fläche der Deckschicht (i) aufgetragen. Die Bestimmung der auf der Deckschicht (i) aufgetragenen Menge an Klebstoff ist dem Fachmann bekannt und erfolgt typischerweise mit einer Waage.

In einer weiteren bevorzugten Ausführungsform der erfindungsgemässen Kompositplatte und nach dem erfindungsgemässen Verfahren erhaltenen Kompositplatte weist der Klebstoff (v) im ungehärteten Zustand eine Brookfield Viskosität von mindestens 1000 mPas, bevorzugt mindestens 5000 mPas, insbesondere mindestens 20'000 mPas, und ganz besonders bevorzugt mindestens 50'000 mPas, auf, gemessen bei 20 Upm und 23°C nach ASTM D1084. Durch solch höheren Viskositäten des Klebstoffs (v) können auch grössere Unebenheiten der Schicht aus Gewebe (ii) mit Klebstoff (iv), die auf der einen Seite der Deckschicht (i) angeordnet ist, vollflächig mit der Trägerplatte (iii) verklebt werden, was in aller Regel zu einem guten und dauerhaften Verbund der Materialien führt.

### Der Primer (vi) und die Imprägnierung (vi)

Die Trägerplatte (iii) der erfindungsgemässen Kompositplatte und der nach dem erfindungsgemässen Verfahren erhaltenen Kompositplatte kann mit einem Primer (vi) und/oder einer Imprägnierung (vi) behandelt sein. Die Behandlung erfolgt oft bevorzugt bevor die Trägerplatte (iii) mit Klebstoff (v) an die mit Klebstoff (iv) und Gewebe (ii) bedeckte Seite geklebt wird. Dadurch können die Haftbedingungen für die nachfolgenden Schichten verbessern werden. Der Primer (vi) und/oder die Imprägnierung (vi) wird in der Regel in einer sehr dünnen Schicht aufgetragen. Durch den Auftrag eines Primers (vi) und/oder einer Imprägnierung (vi) wird verhindert, dass wesentliche Mengen an Klebstoff (v) in die - gegebenenfalls poröse - Trägerplatte (iii) penetriert.

Der Primer (vi) und/oder die Imprägnierung (vi) kann beispielsweise mittels Spritzenmittel, Spritzpistole, Rolle, Walzen, Pinseln, Spachteln, Messerapplikation, Bürsten, Tauchen und/oder Giessen auf die Trägerplatte (iii) aufgetragen werden.

Geeignete Primer (vi), auch Grundierung genannt, und/oder Imprägnierung (vi) sind dem Fachmann bekannt. Nicht-limitierende Beispiele von geeigneten Primern (vi) umfassen wässrige Polymerlösungen, wässrige Polymerdispersionen und/oder wasserfreie Flüssigkeiten. Nicht-limitierende Beispiele von Imprägnierungen (vi) umfassen bei Raumtemperatur flüssige Siliciumverbindungen, beispielsweise monomere und/oder oligomere Alkylalkoxysilane. Der Primer (vi), d.h. die Grundierung, und/oder die Imprägnierung (vi) enthalten in der Regel weder Pigmente noch Füllstoffe.

Ist der Primer (vi) eine wässrige Polymerlösung, werden als Primer (vi) typischerweise wässrige Polyacrylatlösungen bevorzugt. Ist der Primer (vi) eine wässrige Polymerdispersion, ist er typischerweise auf Basis von wässrigen Emulsions- oder Microemulsionspolymerisaten. Nicht-limitierende Beispiele solcher wässriger Polymerdispersionen sind Polymerisate auf Basis von (Meth)Acrylaten, Stryrolacylaten, Styrol-Butadien, Ethylen-Mischpolymerisate wie Ethylen-Vinylester, wobei der Vinylester ein C₁ - C₁₂ Vinylester sein kann, insbesondere Ethylen-Vinylacetat, Ethylen-Vinylester-VeoVa, Ethylen-VeoVa-(Meth)Acrylat, Ethylen-VeoVa-(Meth)Acrylat, Ethylen-Vinylacetat-(Meth)Acrylat, Ethylen-Vinylchlorid und/oder Ethylen-Vinylchlorid-Vinylester. Ist der Primer (vi) eine wasserfreie Flüssigkeit, ist er typischerweise auf Basis von reaktiven Monomeren und/oder Oligomeren, die miteinander chemisch reagieren, gegebenenfalls initiiert durch beispielsweise Wärme, Licht und/oder Strahlung.

### Das Verfahren

Zur Herstellung der erfindungsgemässen Kompositplatten wird bevorzugt in einem ersten Schritt das Gewebe (ii) mit einem Klebstoff (iv) an eine Naturstein Oberfläche, d.h. die Deckschicht (i) aus Naturstein, geklebt, wobei die Verklebung bevorzugt vollflächig erfolgt. Dadurch entsteht auf der einen Seite der Naturstein Oberfläche, d.h. der Deckschicht (i), eine Schicht aus ausgehärtetem faserverstärktem Kunstharz. Anschliessend, d.h. nach dem Aushärten des Klebstoffs (iv), wird eine dünne Schicht Naturstein, d.h. die Deckschicht (i), zusammen mit dem daran mit Klebstoff (iv) geklebten Gewebe (ii) vom Naturstein abgelöst resp. abgeschält. Dieser Prozess ist bekannt und das so erhaltene Produkt, ein Naturstein-Gewebe-Klebstoff Komposit, ist kommerziell erhältlich.

Der so erhaltene Naturstein-Gewebe-Klebstoff Komposit, d.h. die Deckschicht (i), die einseitig mit ausgehärtetem Klebstoff (iv) und Gewebe (ii) bedeckt ist, wird mit dem Klebstoff (v) an die Trägerplatte (iii) geklebt und gegebenenfalls gepresst, wobei die Verklebung bevorzugt vollflächig erfolgt.

Somit umfasst das erfindungsgemässe Verfahren zur Herstellung der Kompositplatte den Schritt des Klebens und gegebenenfalls Pressens der mit Klebstoff (iv) und Gewebe (ii), insbesondere mit ausgehärtetem Klebstoff (iv) und Gewebe (ii), bedeckten Seite der Deckschicht (i) mit dem Klebstoff (v) an die Trägerplatte (iii).

Gemäss dem erfindungsgemässen Verfahren kann der Klebstoff (v) auf die Gewebe/Klebstoff (ii/iv) Schicht und/oder auf die Trägerplatte (iii) aufgetragen werden. Anschliessend werden die Gewebe/ Klebstoff (ii/iv) Schicht und die Trägerplatte (iii) miteinander in Kontakt gebracht, wodurch die Klebstoff (v) Schicht die Gewebe/ Klebstoff (ii/iv) Schicht mit der Trägerplatte (iii) verklebt. Gegebenenfalls können die verklebten Schichten, beispielsweise von Hand und/oder mit einer Presse, zusammengepresst werden.

Der Klebstoff (v) kann beispielsweise mittels Spritzenmittel, Spritzpistole, Rolle, Walzen, Düse, Pinseln, Spachteln, Messerapplikation, Bürsten, Tauchen und/oder Giessen auf die Gewebe/ Klebstoff (ii/iv) Schicht und/oder auf die Trägerplatte (iii) aufgetragen werden.

Im Folgenden wird eine nicht-limitierende, bevorzugte Ausführungsform anhand einer Zeichnung beschrieben, die nicht einschränkend auszulegen sind. Diese Erläuterungen sind Teil der vorgehenden Beschreibung. Es zeigt:

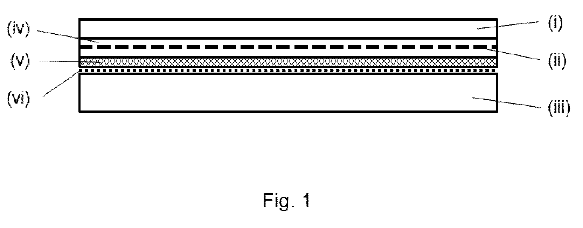

- Fig.1:: Eine beispielhafte und nicht-limitierende Ausführungsform einer Kompositplatte umfassend eine Deckschicht (i) aus Naturstein, ein Gewebe (ii) und eine Trägerplatte (iii). Das Gewebe (ii) ist in dieser Darstellung im Klebstoff (iv) eingebettet, wobei der Klebstoff (iv) mit dem Gewebe (ii) an die Deckschicht (i) geklebt und ausgehärtet ist. Das Gewebe (ii) kann in Form von gewebten Materialien a), Vliesen b) und/oder losen Fasern c) vorliegen. Die Trägerplatte (iii) wurde in dieser Ausführungsform mit dem optionalen Primer (vi) und/oder Imprägnierung (vi) behandelt und mit einem Klebstoff (v) an die ausgehärtete Schicht aus Klebstoff (iv)/ Gewebe (ii) geklebt. Nicht gezeigt ist eine Beschichtung und/oder Imprägnierung der Deckschicht (i) resp. der ganzen Kompositplatte, wobei die Beschichtung und/oder Imprägnierung optional und somit nichtzwingend ist.

## Patentansprüche

1. Kompositplatte umfassend (i) eine Deckschicht aus Naturstein, (ii) ein Gewebe, (iii) eine Trägerplatte, einen Klebstoff (iv) und einen Klebstoff (v), wobei das Gewebe (ii) mit dem Klebstoff (iv) mit einer Seite der Deckschicht (i) verklebt ist und die Trägerplatte (iii) durch den Klebstoff (v) mit dem Gewebe (ii) und/oder dem ausgehärteten Klebstoff (iv) verklebt ist, **dadurch gekennzeichnet, dass** die Deckschicht (i) Schiefer, Tonstein, Siltstein, Mergel und/oder Quarzit umfasst und eine Schichtdicke von 0,1 bis 7 mm, bevorzugt von 0,5 bis 7 mm, insbesondere von 0,6 bis 5 mm, gemessen mit einem Messschieber nach DIN 862, besitzt.

2. Kompositplatte nach Anspruch 1, **dadurch gekennzeichnet, dass** die Deckschicht (i) und das Gewebe (ii) mit dem Klebstoff (iv), und/oder die Trägerplatte (iii) und das Gewebe (ii) und/oder der ausgehärtete Klebstoff (iv) mit dem Klebstoff (v), vollflächig miteinander verklebt sind.

3. Kompositplatte nach Anspruch 1 oder 2, **dadurch gekennzeichnet, dass** die Kompositplatte ein Gewicht von 2 bis 30 kg/m², bevorzugt von 3 bis 30 kg/m², aufweist.

4. Kompositplatte nach mindestens einem der Ansprüche 1 bis 3, **dadurch gekennzeichnet, dass** der Klebstoff (v) im ungehärteten Zustand eine Brookfield Viskosität von mindestens 1000 mPas, bevorzugt mindestens 5000 mPas, insbesondere mindestens 20'000 mPas, und ganz besonders bevorzugt mindestens 50'000 mPas, aufweist, gemessen bei 20 Upm und 23°C nach ASTM D1084.

5. Kompositplatte nach mindestens einem der Ansprüche 1 bis 4, **dadurch gekennzeichnet, dass** die Deckschicht (i) mit einer Beschichtung und/oder Imprägnierung behandelt ist.

6. Kompositplatte nach mindestens einem der Ansprüche 1 bis 5, **dadurch gekennzeichnet, dass** das Gewebe (ii) ein Kunstfasergewebe, Mineralfasergewebe und/oder ein Glasfasergewebe umfasst.

7. Kompositplatte nach mindestens einem der Ansprüche 1 bis 6, **dadurch gekennzeichnet, dass** die Trägerplatte (iii) eine Platte aus Zement-Faser Komposit, Gips, Keramik, Leichtbeton, Glasfaserbeton, Glas, Metall wie Aluminium, Kupfer, Stahl oder Eisen, eine Holzplatte aus Naturholz oder Holzwerkstoffplatte, insbesondere Holzspanplatte und/oder MDF-Platte, Kunststoffplatte, insbesondere aus High Pressure Laminate, PVC, Acrylglas oder Plexiglas, und/oder eine Dämmplatte, insbesondere eine Dämmplatte aus Polystyrolschaum, Polyurethan, Polyisocyanurat, Mineralwolle, eine Aerogelplatte und/oder Vakuumplatte, darstellt.

8. Kompositplatte nach mindestens einem der Ansprüche 1 bis 7, **dadurch gekennzeichnet, dass** die Trägerplatte (iii) eine Schichtdicke von 4 bis 20 mm, bevorzugt 4 bis 12 mm, gemessen mit einem Messschieber nach DIN 862, besitzt.

9. Kompositplatte nach mindestens einem der Ansprüche 1 bis 8, **dadurch gekennzeichnet** der Klebstoff (iv) und/oder der Klebstoff (v) ein Klebstoff (iv,v) auf Basis von Polyester, Polyamid, (Meth)Acrylat, Polyurethan, Epoxy-Härter, Polychloropren, und/oder ein Schmelzklebstoff, reaktiver Klebstoff, Kontaktklebstoff, Dispersionsklebstoff, Plastisol, strahlen-härtender Klebstoff und/oder Mehrkomponenten-Klebstoff ist.

10. Kompositplatte nach mindestens einem der Ansprüche 1 bis 9, **dadurch gekennzeichnet, dass** an der zur Deckschicht (i) abgewandten Seite der Trägerplatte (iii) mindestens ein Befestigungselement befestigt ist um damit die Kompositplatte an einem dafür vorgesehenen Element zu befestigen.

11. Kompositplatte nach mindestens einem der Ansprüche 1 bis 10, **dadurch gekennzeichnet, dass** mindestens eine Seite der Trägerplatte (iii) mit einem Primer (vi) und/oder einer Imprägnierung (vi) behandelt ist.

12. Verfahren zur Herstellung der Kompositplatte nach mindestens einem der Ansprüche 1 bis 11 umfassend den Schritt des Klebens und gegebenenfalls Pressens einer mit ausgehärtetem Klebstoff (iv) und Gewebe (ii) bedeckten Seite der Deckschicht (i) mit einem Klebstoff (v) an die Trägerplatte (iii).

13. Verwendung der Kompositplatte nach mindestens einem der Ansprüche 1 bis 11 zur Verkleidung von Fassaden, Wänden, Böden, Dielen und/oder Dächern, insbesondere im Aussen- und/oder Innenbereich von Gebäuden, Schiffen, Fahrzeugen, Flugzeugen, Aussenbauten, Tunneln, U-Bahn Stationen und/oder Objekte wie Monumente oder Brunnen.

14. Verwendung der Kompositplatte nach mindestens einem der Ansprüche 1 bis 11 als äussere Schicht einer Gebäudefassade, insbesondere vorgehängten Gebäudefassade.

15. Fassade, bevorzugt Gebäudefassade, insbesondere vorgehängte Gebäudefassade, umfassend mindestens eine Kompositplatte nach mindestens einem der Ansprüche 1 bis 11.
